# EUROPÄISCHE PATENTSCHRIFT

(11) **EP 1 210 239 B1**
(45) Veröffentlichungstag und Bekanntmachung des Hinweises auf die Patenterteilung: **26.11.2003**
(21) Anmeldenummer: 00974365.9
(22) Anmeldetag: 05.09.2000
(51) Int. Cl.: B60K 17/22, B60K 17/346, B60K 17/08

(54) **GETRIEBEEINHEIT**
GEARBOX UNIT
BOITE DE VITESSES

(30) Priorität: 11.09.1999 DE 19943623
(43) Veröffentlichungstag der Anmeldung: 05.06.2002
(73) Patentinhaber: ZF FRIEDRICHSHAFEN Aktiengesellschaft, 88038 Friedrichshafen (DE)
(72) Erfinder: WAFZIG, Jürgen, 88097 Eriskirch (DE); GRUMBACH, Martin, 88045 Friedrichshafen (DE); HOHER, Markus, 88048 Friedrichshafen (DE)
(86) Internationale Anmeldenummer: EP0008634
(87) Internationale Veröffentlichungsnummer: WO01019637

(56) Entgegenhaltungen:
- EP-A- 0 078 124
- EP-A- 0 743 218
- WO-A-99/05433
- DE-A- 2 948 194
- DE-A- 4 432 889
- DE-A- 19 631 236
- DE-A- 19 639 904
- US-A- 5 888 161

## Beschreibung

Die vorliegende Erfindung betrifft eine Getriebeeinheit, insbesondere für Kraftfahrzeuge, mit einem Gehäuse, mit einer Antriebswelle, mit einer Abtriebswelle und mit einer Anordnung zur Veränderung des Übersetzungsverhältnisses zwischen Antriebswelle und Abtriebswelle, die ein stufenloses Getriebe aufweist.

Stufenlose Getriebe sind in Form von Umschlingungsgetrieben (CVT) oder in Form von Reibradgetrieben vielfältig bekannt. So beschreibt die DE 198 44 374.9 der Anmelderin ein CVT-Getriebe, das ein erstes Kegelscheibenpaar auf einer Antriebswelle aufweist und ein zweites Kegelscheibenpaar auf einer Abtriebswelle aufweist, wobei jedes Kegelscheibenpaar aus einer in axialer Richtung feststehenden ersten Scheibe und aus einer in axialer Richtung verschiebbaren zweiten Kegelscheibe (Primärscheiben bzw. Sekundärscheiben) besteht. Zwischen den Kegelscheibenpaaren läuft ein Umschlingungsorgan, z. B. ein Schubgliederband. Die Verstellung der Primärscheibe bzw. Sekundärscheibe erfolgt durch ein Druckmedium mit Hilfe eines elektronischen Steuergerätes, welches über elektromagnetische Stellglieder und hydraulische Ventile das Druckniveau der Stellräume von Primärscheibe und Sekundärscheibe ansteuert.

Ein Reibradgetriebe ist in der WO 99/05433 der Anmelderin beispielsweise beschrieben. Es weist koaxial zu einer gemeinsamen Welle angeordnete Eingangs- und Ausgangsscheiben auf, die paarweise zueinander angeordnet sind und deren Innenflächen toroidförmig ausgestaltet sind, sowie zwischen den Paaren von Eingangs- und Ausgangsscheiben angeordnete Reibräder. Diese Reibräder stehen sowohl mit den Eingangsscheiben als auch mit den Ausgangsscheiben in Reibkontakt und übertragen das ihnen von der Eingangsscheibe übertragene Drehmoment auf die Ausgangsscheibe durch reibschlüssigen Kontakt, wobei die Drehzahl der Reibräder um so höher liegt, je größer der Abstand zwischen ihrer Berührungsstelle mit der Eingangsscheibe und der Drehachse ist. Die Drehzahl der Ausgangsscheibe hingegen ist um so größer, je näher die Berührungsstelle zwischen Reibrad und Ausgangsscheibe an der Drehachse liegt. Durch Verschwenkung der Reibräder kann demzufolge die Drehzahl der Ausgangsscheibe stufenlos und beliebig eingestellt werden. Zu diesem Zweck sind die Drehachsen der Reibräder an einem Träger gelagert, der über eine Verschwenkeinrichtung ansteuerbar ist. Die beiden Eingangsscheiben der beiden Getriebeeinheiten sind hierbei drehfest mit einer Drehmomentwelle verbunden, während die beiden Ausgangsscheiben der beiden Getriebeeinheiten, die spiegelsymmetrisch zueinander und nebeneinander im Getriebe angeordnet sind, auf einer gemeinsamen Buchse angeordnet sind, welche drehbar auf der Drehmomentwelle gelagert ist. Die Drehmomentwelle wird von einer Eingangswelle durchsetzt, die mit einem Anfahrelement eines Kraftfahrzeuges, beispielsweise einem Drehmomentwandler oder einer naßlaufenden Anfahrkupplung der Antriebsmaschine des Fahrzeugs verbunden ist.

Die US-A-5 888 161 beschreibt ein automatisches Getriebe für ein Kraftfahrzeug, welches ein CVT-Getriebe aufweist, dessen Eingangswelle mit einem Anfahrelement in Form eines hydrodynamischen Wandlers verbunden ist und dessen Ausgangswelle mit einer Zwischenwelle verbunden ist. Zwischen hydrodynamischem Wandler und CVT-Getriebe ist ein Planetentrieb vorgesehen, der einerseits mit der Eingangswelle und andererseits mit einer Vorgelegewelle verbunden ist, die zu einem Zahnradpaar führt, welches dem CVT nachgeordnet ist und das ein festes Übersetzungsverhältnis aufweist. Das Zahnradpaar weist eine erste Abtriebswelle für den Hinterachsantrieb auf sowie eine zweite Abtriebswelle, welches das CVT-Getriebe durchsetzt für den Vorderachsantrieb.

Damit wird ein Allradantrieb unter Verwendung eines CVT-Getriebes geschaffen, bei dem das Anfahren des Kraftfahrzeuges über ein als Bypass zum CVT-Getriebe ausgestaltetes Untersetzungsgetriebe erfolgt, um so das beim Anfahren erforderliche große Anfahrmoment ausschließlich über einen Zahnrädereingriff auf die Achsen zu übertragen und nicht über das CVT-Getriebe. Weitere Hochschaltgänge werden ebenfalls mit einem festen Übersetzungsverhältnis, jedoch unter Einsatz des CVT-Getriebes geschaltet. Die Verteilung des Drehmomentes zwischen Vorderachse und Hinterachse steht hierbei in einem festen Verhältnis zueinander für alle geschalteten Gänge.

Aus der EP-A-743 218 ist ein Allradantrieb für ein Kraftfahrzeug unter Verwendung eines Reibradgetriebes bekannt. Dem Reibradgetriebe ist hierbei ein Differentialoder ein Planetentrieb zugeordnet, welches eine Abtriebswelle für die Hinterradachse und eine Abtriebswelle für die Vorderradachse des Kraftfahrzeuges aufweist. Hiermit wird in einstellbarer Weise eine Verteilung des Drehmomentes zwischen Hinterachse und Vorderachse des Kraftfahrzeuges ermöglicht, wobei jedoch das hierbei verwendete Reibradgetriebe zwei Getriebeeinheiten aufweist, deren Drehmomente jeweils einer eigenen Ausgangswelle übertragen wird, die unabhängig voneinander sind und nur über das Differential miteinander in Verbindung stehen. Das von der ersten Getriebeeinheit abgegebene Drehmoment wird teilweise über das Differential der Vorderachse und teilweise der Hinterachse des Fahrzeugs zugeführt. Das von der zweiten Getriebeeinheit abgegebene Drehmoment wird vollständig und ohne Zwischenschaltung des Differentials der Hinterachse zugeführt. Damit kann eine Drehmomentverteilung von etwa 25 % zur Vorderachse und 75 % zur Hinterachse erreicht werden, wie es insbesondere für schwere Lastkraftwagen vorteilhaft ist.

Dies hierbei verwendete Reibradgetriebe erfordert einerseits einen erhöhten Bauaufwand, da hierbei zwei Anpreßeinrichtungen und zwei Abtriebseinrichtungen für das Reibradgetriebe erforderlich sind sowie zwei Lager und eine Einrichtung, um die Übersetzung für die Hinterradachse motorabhängig einzustellen..

Aus dem nächstkommenden Stand der Technik nach DE 44 32 889 A1 ist ein Fahrzeug mit stufenlosem Getriebe bekannt, wobei ein Vorderachsdifferential senkrecht unter einer Vorwärts-/Rückwärts-Wechselvorrichtung abgehängt ist. Eine Achse des Differentials schneidet dabei rechtwinklig eine Achse einer Drehzahlmindervorrichtung in einer integrierten Konstruktion. Ferner ist eine Verteilereinrichtung hinter der Drehzahlmindervorrichtung vorgesehen, so dass eine kompakte Konstruktion mit einem Zwei- bzw. Vierradantrieb vorgeschlagen ist.

Aufgabe der vorliegenden Erfindung ist es, eine Getriebeeinheit insbesondere für ein Kraftfahrzeug zu schaffen, welche neben dem stufenlosen Getriebe eine Vielzahl von weiteren für den Antrieb eines Fahrzeugs erforderlichen Bauteilen aufweist und das sowohl als Getriebeeinheit für den Antrieb einer Achse als auch als Getriebeeinheit für den Antrieb zweier Achsen, d. h. Vorderachse und Hinterachse eines Kraftfahrzeugs einsetzbar ist, wobei der Bauaufwand erheblich verringert und eine möglichst flache Bauweise der Getriebeeinheit vorgeschlagen ist.

Die Lösung dieser Aufgabe erfolgt mit den im Anspruch 1 angegebenen Merkmalen; vorteilhafte Ausgestaltungen sind in den Unteransprüchen beschrieben.

Die erfindungsgemäße Getriebeeinheit weist also ein Gehäuse auf, mit einer Antriebswelle und mit mindestens einer Abtriebswelle, wobei im Gehäuse die folgenden Bauteile angeordnet sind:
ein mit der Antriebswelle verbundenes Anfahrelement,
ein mit dem Anfahrelement verbundenes stufenloses Getriebe, ein mit dem stufenlosen Getriebe verbundenes Verteilergetriebe, das
eine erste Abtriebswelle aufweist, die mit dem Hinterachsantrieb verbunden ist und eine zweite Abtriebswelle aufweist, die mit einem Differential für den Vorderachsantrieb verbunden ist, wobei
mindestens eine der Halbachsen zwischen dem Differential für den Vorderachsantrieb und dem zugehörigen Vorderrad das Gehäuse zwischen dem Anfahrelement und dem stufenlosen Getriebe durchsetzt oder, wenn das Anfahrelement als integrierte Anfahrkupplung ausgebildet ist, durchsetzt eine Halbachse das Gehäuse vor der Eingangsseite des stufenlosen Getriebes und die Halbachse ist unter der Antriebswelle jedoch nicht niedriger als das Anfahrelement angeordnet.

Das stufenlose Getriebe kann dabei ein CVT-Getriebe oder ein Reibradgetriebe sein, wobei letzteres einen Aufbau aufweist, wie er beispielsweise in der eingangs erwähnten WO 99/05433 beschrieben ist, bei dem also die beiden Getriebeeinheiten über einen gemeinsamen Ausgang mit dem Verteilergetriebe verbunden sind, so daß der Bauaufwand für das Reibradgetriebe im Vergleich zu dem in der eingangs erwähnten EP 0 743 218 beschriebenen Reibradgetriebe erheblich verringert ist.

Das erfindungsgemäß im Gehäuse integrierte Verteilergetriebe weist vorteilhafterweise ein Mittendifferential auf für die Verteilung des Drehmomentes an die Hinterachse und an die Vorderachse des mit dieser Getriebeeinheit versehenen Kraftfahrzeuges, sofern die Getriebeeinheit einen Allradantrieb des Fahrzeugs gewährleisten soll. Genauso gut ist es auch möglich, das Verteilergetriebe dahingehend auszugestalten, daß das gesamte vom stufenlosen Getriebe abgegebene, dem Verteilergetriebe übermittelte Drehmoment ausschließlich dem Hinterachsantrieb des Fahrzeugs zugeführt wird, durch Überbrückung der Verbindung zwischen dem Verteilergetriebe und dem Vorderachsdifferential, so daß die erfindungsgemäße Getriebeeinheit ausschließlich für den Antrieb der Hinterachse verwendbar ist.

Durch die erfindungsgemäße Integration einer Vielzahl von Bauteilen in einem einzigen Gehäuse wird nicht nur der Bauraumbedarf erheblich gesenkt, sondern auch, wie bereits erwähnt, der Vorteil erzielt, daß die Getriebeeinheit als Standardgetriebeeinheit oder Allradgetriebeeinheit verwendbar ist, wodurch die Herstellungskosten und die Lagerhaltung verringert werden; die Einstellung der Achsübersetzung erfolgt zwischen dem Verteilergetriebe und dem stufenlosen Getriebe; die Ausgestaltung des Drehmomentverlaufs läßt sich individuell im Verteilergetriebe je nach den Bedürfnissen im Falle einer Ausgestaltung als Allradgetriebeeinheit einstellen.

Im folgenden wird die Erfindung anhand der Zeichnung näher erläutert, in der vorteilhafte Ausgestaltungen einer erfindungsgemäßen Getriebeeinheit dargestellt sind.
Es zeigen:
- Fig. 1: schematisch die in der Getriebeeinheit vorhandenen Bauteile;
- Fig. 2: einen Teilschnitt durch den der Antriebseinheit eines Kraftfahrzeugs zugewandten Ende einer erfindungsgemäßen Getriebeeinheit mit den wesentlichen Bauteilen und die
- Fig. 3 bis 23: verschiedene Ausführungsformen erfindungsgemäßer Getriebeeinheiten in schematischer Darstellung.

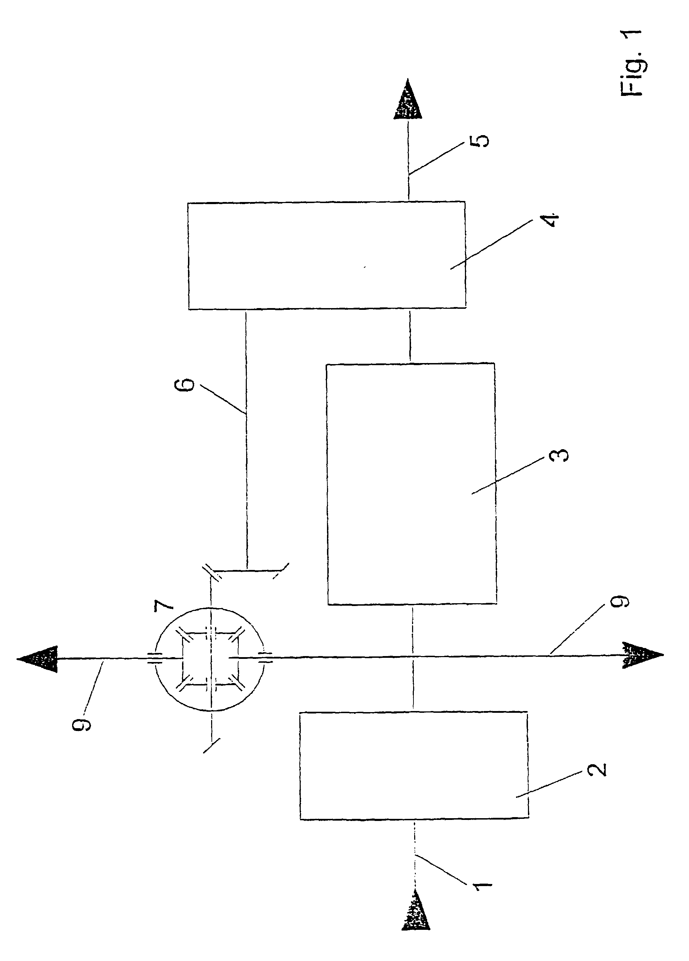

In Fig. 1 sind die wesentlichen, in einem (nicht dargestellten) Gehäuse zusammengefaßten, d. h. integrierten Bauteile für eine erfindungsgemäße Getriebeeinheit dargestellt. Mit 1 ist dabei die mit dem Motor des Kraftfahrzeugs verbundene Antriebswelle bezeichnet, mit 2 das mit der Antriebswelle verbundene Anfahrelement, in dem auch die Ölversorgung integriert ist, mit 3 ein stufenloses Getriebe, das ein Reibradgetriebe oder ein CVT-Getriebe sein kann, mit 4 ein mit dem stufenlosen Getriebe verbundenes Verteilergetriebe, das eine erste Abtriebswelle 5 aufweist für den Hinterachsantrieb des Kraftfahrzeuges und das eine zweite Abtriebswelle 6 aufweist, die mit einem Differential 7 für einen Vorderachsantrieb in Verbindung steht. Vom Differential 7 gehen in herkömmlicher Weise zwei Halbachsen 9 zu den beiden Vorderrädern des Kraftfahrzeuges aus.

Die erfindungsgemäße Getriebeeinheit, wie sie in Fig. 1 skizziert ist, zeichnet sich also aus durch:
einen Abtrieb für die Hinterachse,
einen Abtrieb für die Vorderachse,
ein im Verteilergetriebe für die Momentenverteilung an Hinterachse und Vorderachse vorgesehenes Mittendifferential, ein Vorderachsdifferential für die Momentenverteilung an das linke und an das rechte Vorderrad,
ein stufenloses Getriebe in Form eines CVT-Getriebes oder eines Reibradgetriebes, mit oder ohne Leistungsverzweigung, ein Anfahrelement, das eine Anfahrkupplung, eine integrierte Anfahrkupplung oder ein Drehmomentwandler sein kann oder auch ein in das stufenlose Getriebe integriertes Geared-Neutral-Getriebe, welches das Anfahrelement ersetzt.

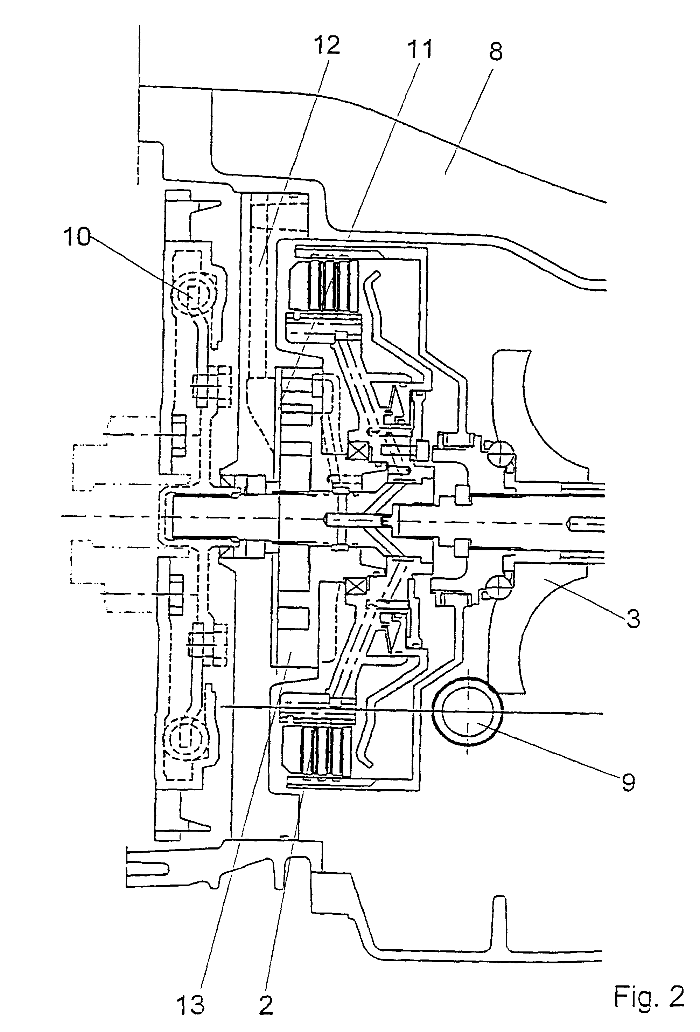

Fig. 2 zeigt einen Teil eines konkreten Ausführungsbeispiels einer erfindungsgemäßen Getriebeeinheit, wobei in einem Gehäuse 8 eine Anfahrkupplung 2 vorgesehen ist, die teilweise eine Ölversorgungseinheit 11, eine motorseitige Ölzufuhreinrichtung, insbesondere in Form einer Kanalplatte und eine getriebeseitige Ölpumpe 13 umgibt. Mit 10 ist hierbei ein motorseitig angeordneter Torsionsdämpfer für die Schwingungsdämpfung bezeichnet. Fig. 2 zeigt ferner, daß zumindest eine der beiden Halbachsen 9, die das Vorderachsdifferential mit den Vorderrädern verbinden, zwischen dem Anfahrelement 2 und dem stufenlosen Getriebe 3, das hier als Reibradgetriebe ausgestaltet ist, verläuft, um so Kollisionen mit den einzelnen Komponenten der Getriebeeinheit zu vermeiden.

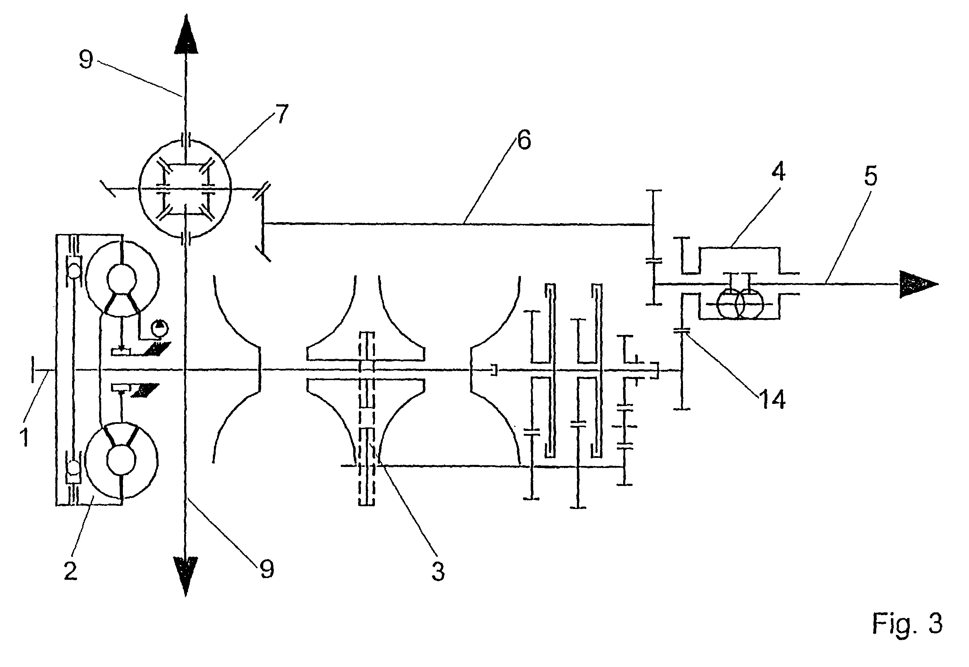

Bei den in den Fig. 3 bis 22 dargestellten verschiedenen Getriebeschemata sind jeweils gleiche Teile mit gleichen Bezugszeichen versehen, wobei in allen diesen Ausführungsbeispielen als stufenloses Getriebe ein Reibradgetriebe 3 gewählt ist.

Fig. 3 zeigt, daß die erfindungsgemäße Getriebeeinheit (wobei jeweils das Gehäuse 8 nicht dargestellt ist) mit einem Anfahrelement 2 in Form eines hydrodynamischen Wandlers versehen ist, wobei die Getriebeeinheit hierbei als Zweibereichsgetriebe ohne Leistungsverzweigung ausgeführt ist; mit 14 ist ein Zahnradpaar zur Einstellung der Endübersetzung bezeichnet, die hierbei zwischen dem stufenlosen Getriebe 3 und dem Verteilergetriebe 4 erfolgt.

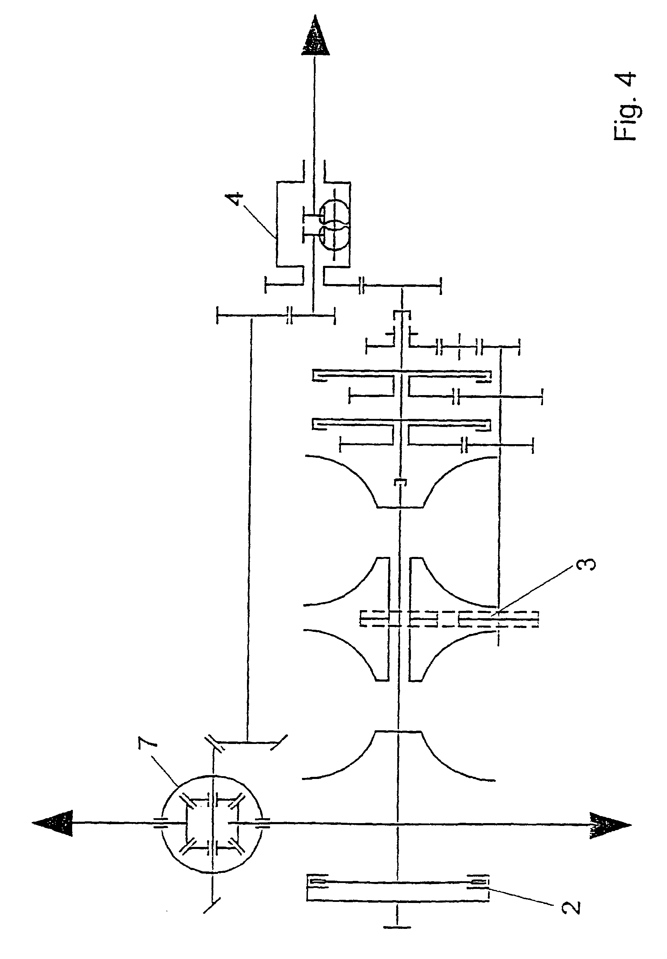

Fig. 4 zeigt eine Zweibereichsgetriebeeinheit ohne Leistungsverzweigung, wobei das Anfahrelement 2 eine Anfahrkupplung ist.

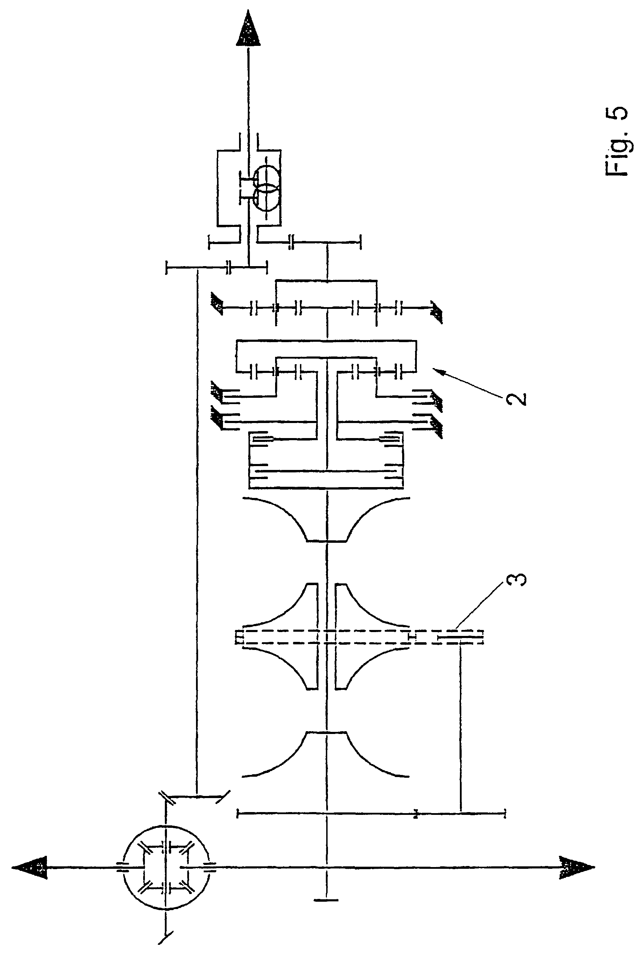

Fig. 5 zeigt eine Zweibereichsgetriebeeinheit ohne Leistungsverzweigung, wobei das Anfahrelement eine integrierte Anfahrkupplung ist, die mit zwei Einzelplanetenradsätzen versehen ist.

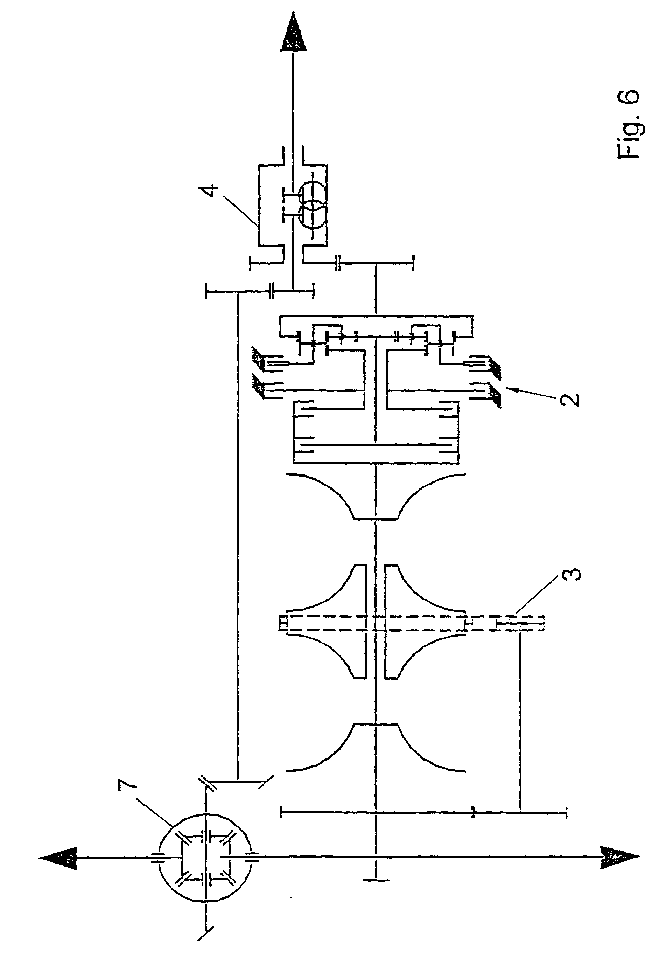

Fig. 6 zeigt eine Zweibereichsgetriebeeinheit ohne Leistungsverzweigung, wobei das Anfahrelement 2 als integrierte Anfahrkupplung ausgeführt ist, die einen geschachtelten Planetenradsatz aufweist.

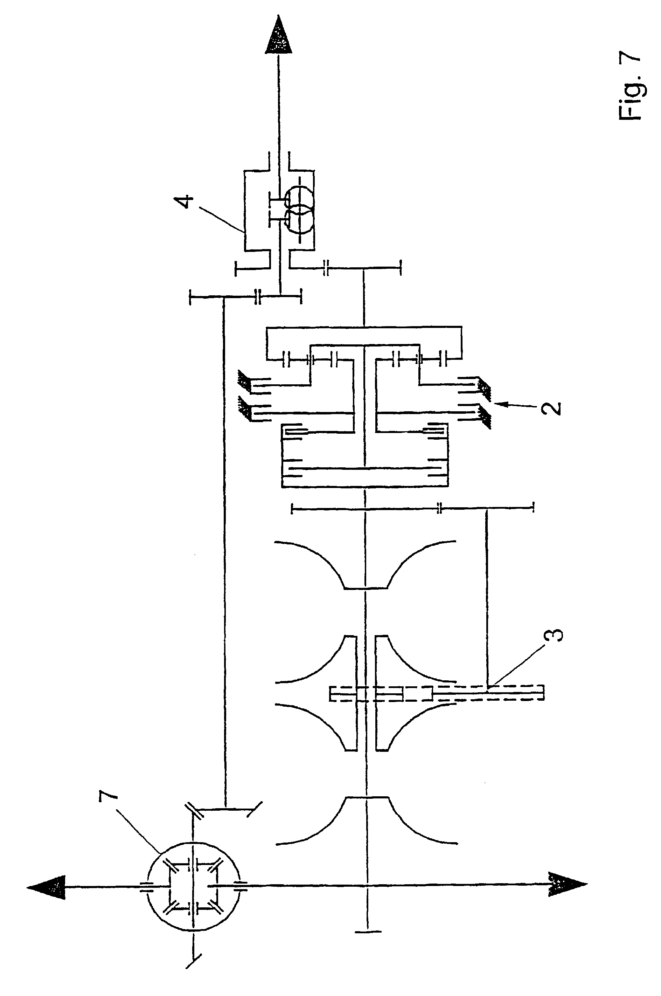

Fig. 7 zeigt eine Zweibereichsgetriebeeinheit ohne Leistungsverzweigung, wobei das Anfahrelement 2 als integrierte Anfahrkupplung ausgeführt ist, die mit einem einfachen Planetenradsatz versehen ist.

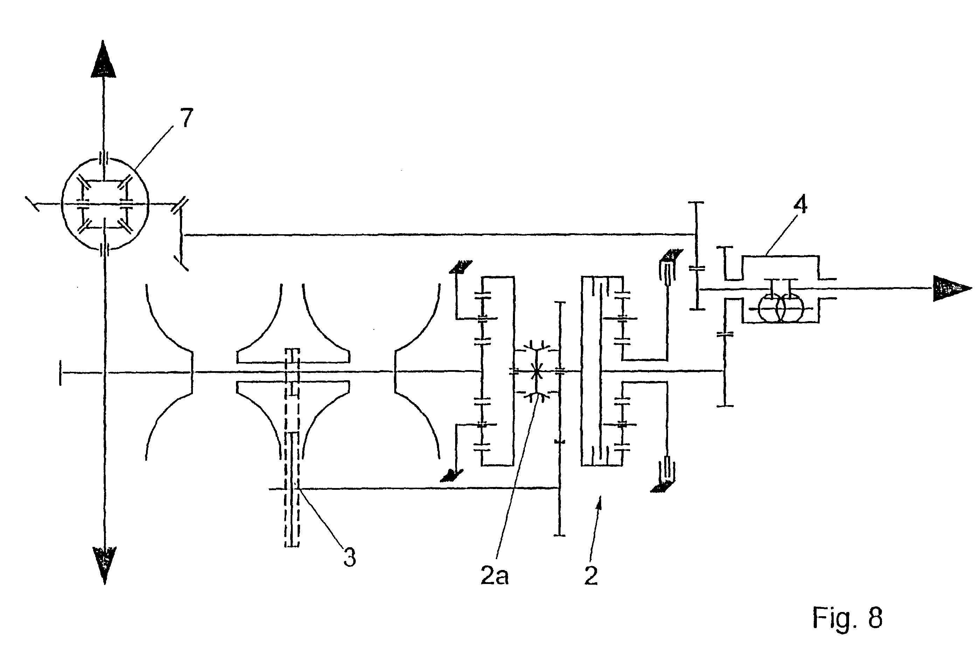

Fig. 8 zeigt eine Zweibereichsgetriebeeinheit ohne Leistungsverzweigung, bei der das Anfahrelement 2 als integrierte Anfahrkupplung ausgeführt ist und wobei ein Schaltelement als Klauenkupplung 2a vorgesehen ist.

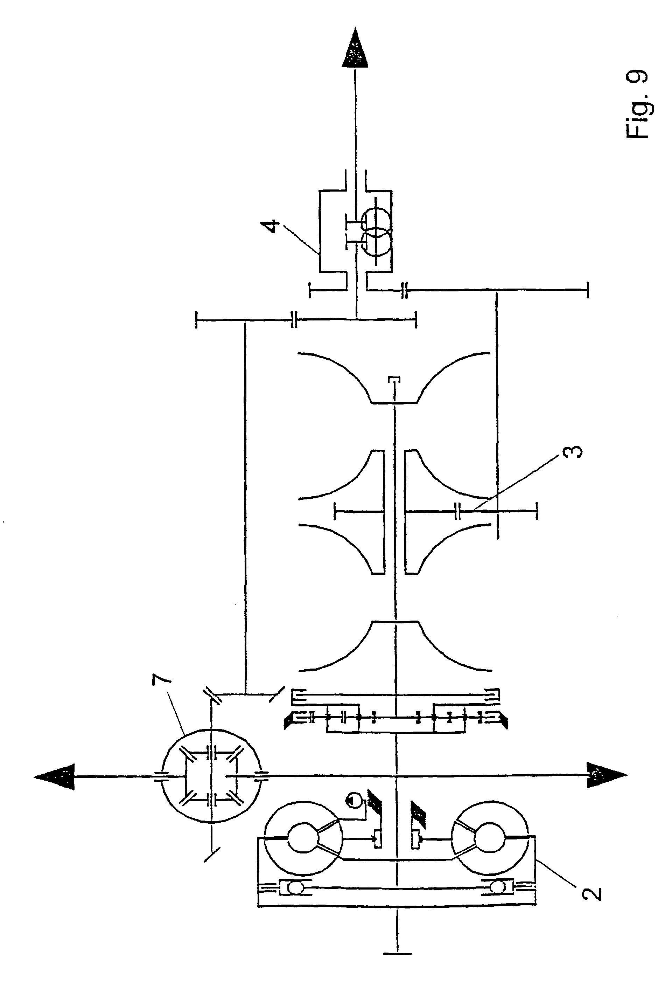

Fig. 9 zeigt eine Einbereichsgetriebeeinheit, wobei das Anfahrelement 2 als hydrodynamischer Wandler ausgeführt ist.

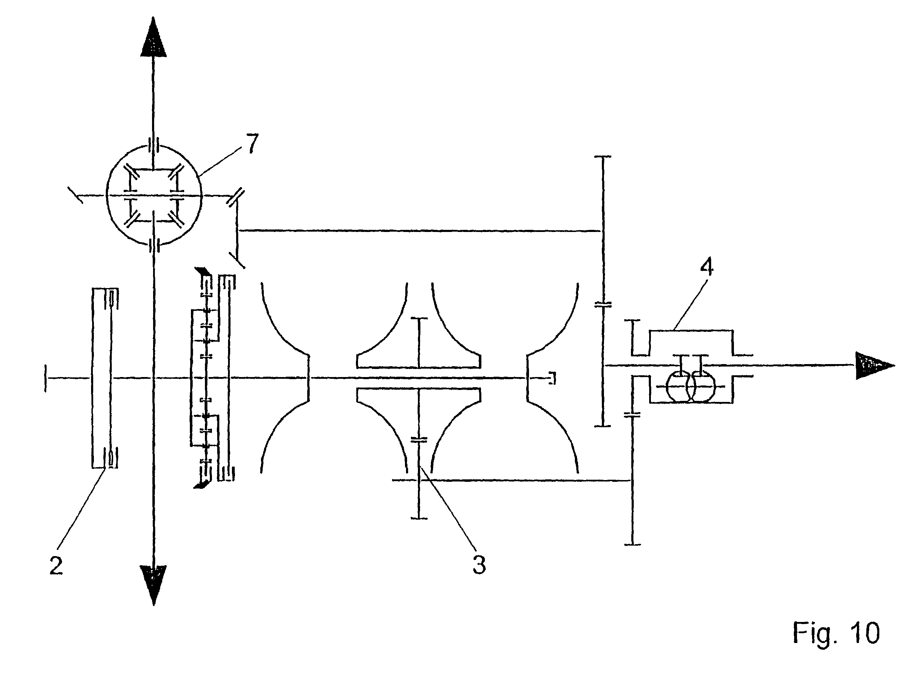

Fig. 10 zeigt eine Einbereichsgetriebeeinheit, bei der das Anfahrelement 2 als Anfahrkupplung ausgeführt ist.

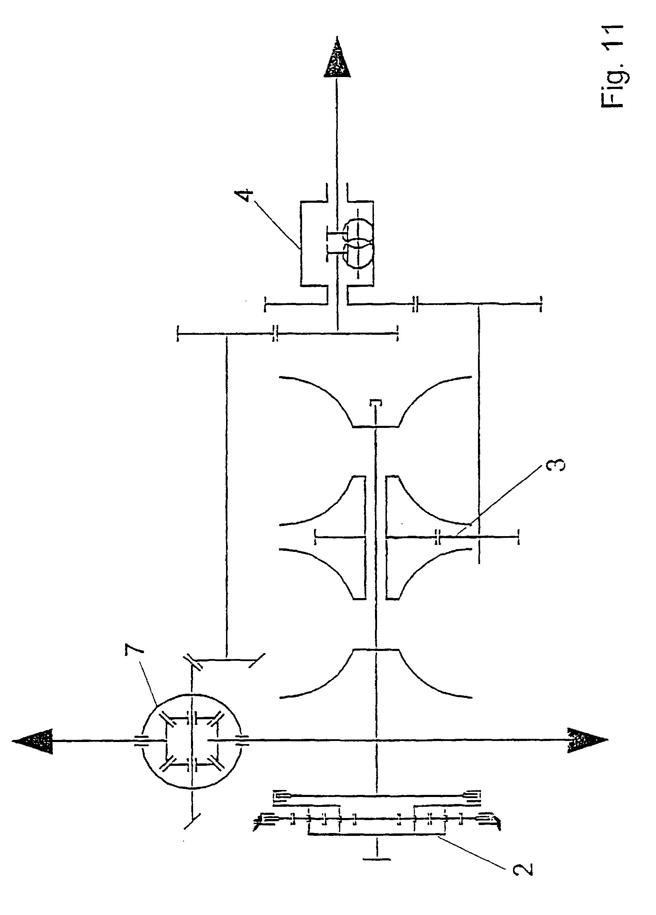

Fig. 11 zeigt eine Einbereichsgetriebeeinheit, bei der das Anfahrelement 2 als integrierte Anfahrkupplung ausgeführt ist.

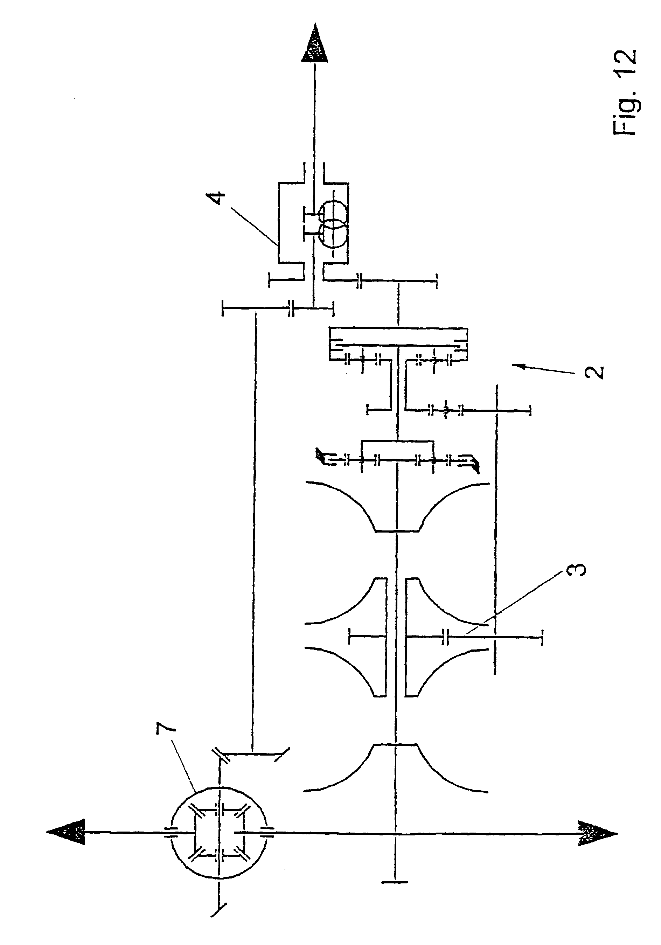

Fig. 12 zeigt eine Zweibereichsgetriebeeinheit, bei der das Anfahrelement in Form eines "Geared-Neutral-Getriebes" ausgeführt ist, mit einer entsprechenden Anzahl von Kupplungen und einem Planetenradsatz, so daß Leerlauf, Vorwärtsfahrt und Rückwärtsfahrt durch Verstellung des Variators eingestellt werden können.

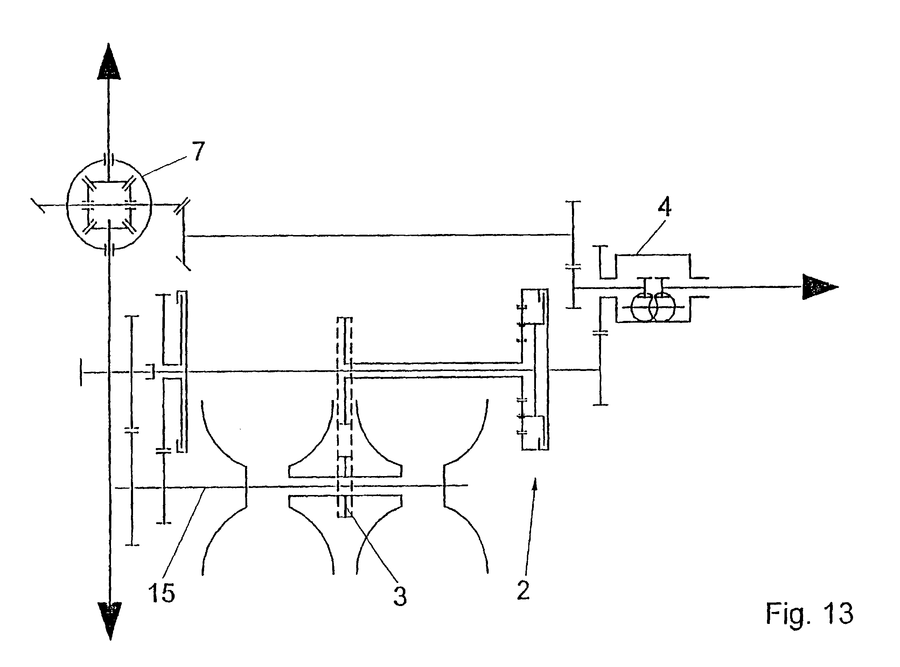

Fig. 13 zeigt eine Zweibereichsgetriebeeinheit mit einem Geared-Neutral-Getriebe als Anfahrelement, wobei das Reibradgetriebe 3 auf der Vorgelegewelle 15 angeordnet ist.

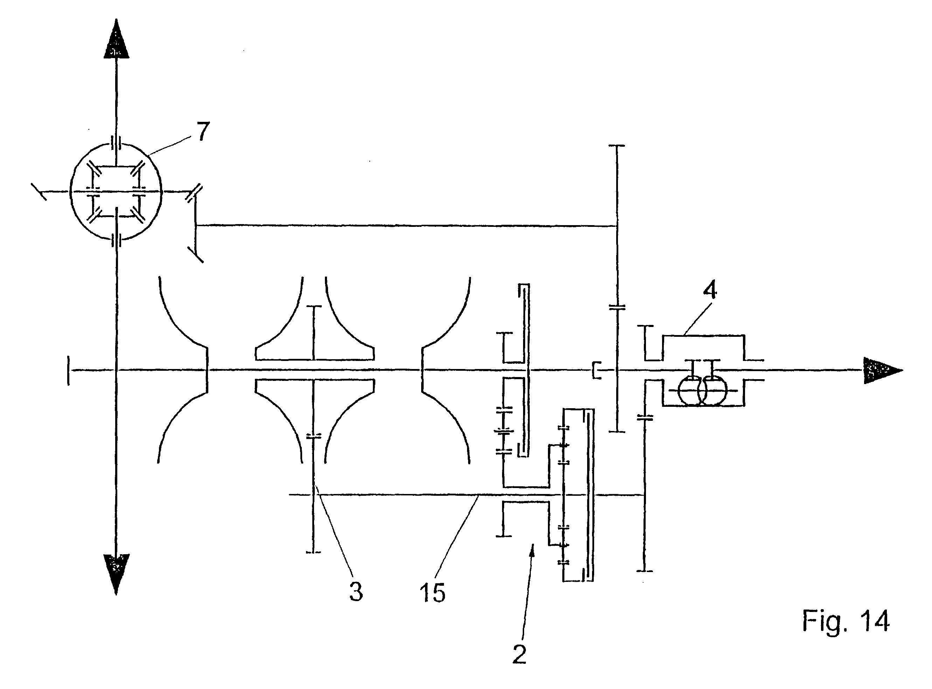

Fig. 14 zeigt eine Zweibereichsgetriebeeinheit mit Geared-Neutral-Getriebe, wobei der dazu gehörende Planetenradsatz auf der Vorgelegewelle 15 angeordnet ist.

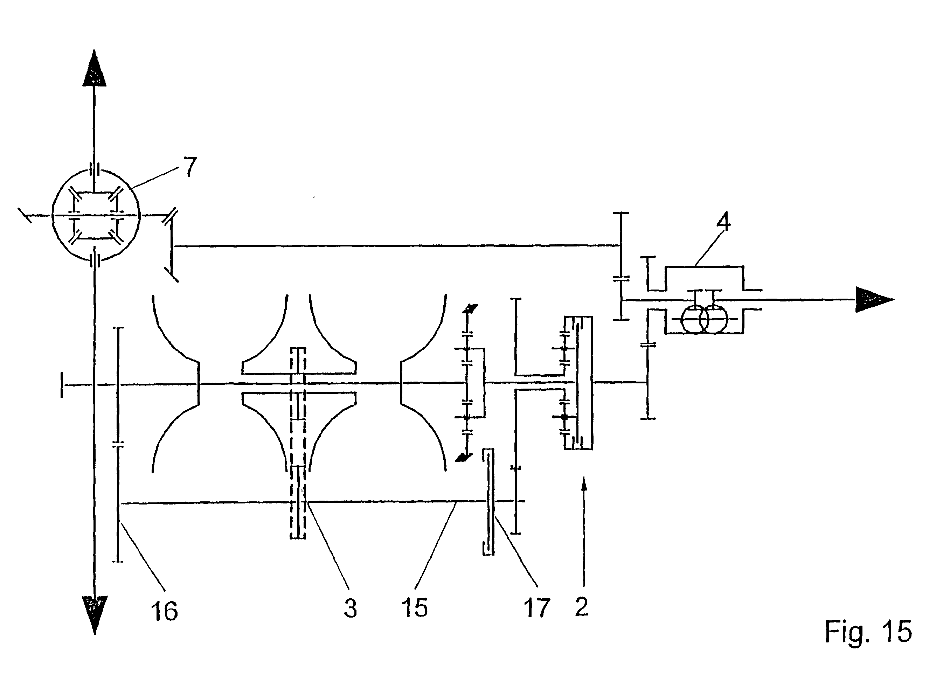

Fig. 15 zeigt eine Zweibereichsgetriebeeinheit mit Geared-Neutral-Getriebe als Anfahrelement 2, das einen Stirntrieb 16 aufweist sowie eine Kupplung 17 auf der Vorgelegewelle 15.

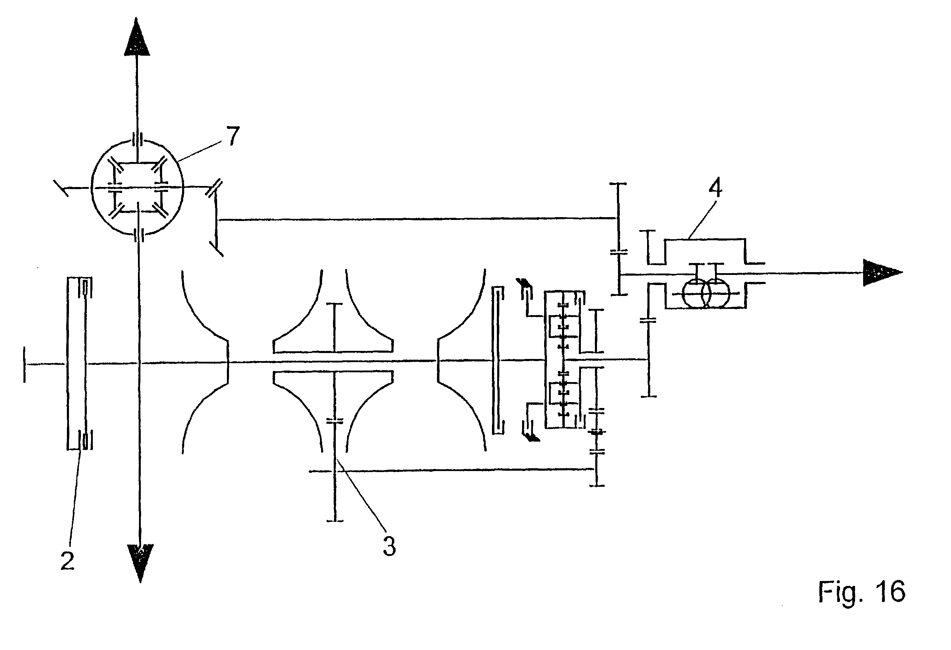

Fig. 16 zeigt eine Zweibereichsgetriebeeinheit mit Leistungsverzweigung, bei der das Anfahrelement 2 als Anfahrkupplung ausgebildet ist und wie sie teilweise in Fig. 2 im Schnitt dargestellt ist.

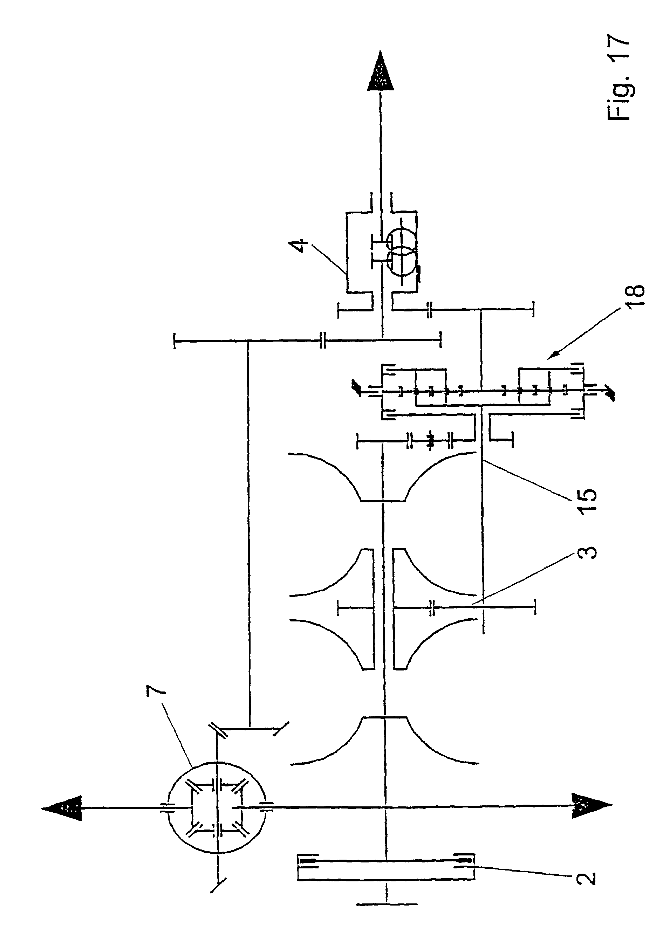

Fig. 17 zeigt eine Zweibereichsgetriebeeinheit mit Leistungsverzweigung, bei der auf der Vorgelegewelle 15 ein Planetentrieb 18 angeordnet ist.

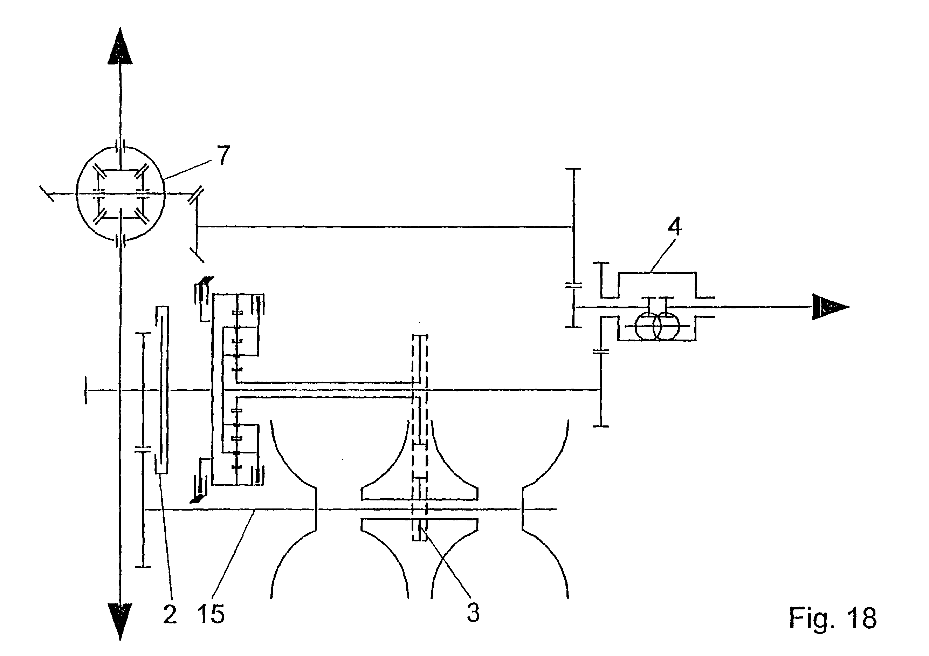

Fig. 18 zeigt eine Zweibereichsgetriebeeinheit mit Leistungsverzweigung, bei der das Anfahrelement 2 als integrierte Anfahrkupplung ausgestaltet ist und bei der das Reibradgetriebe 3 auf der Vorgelegewelle 15 angeordnet ist.

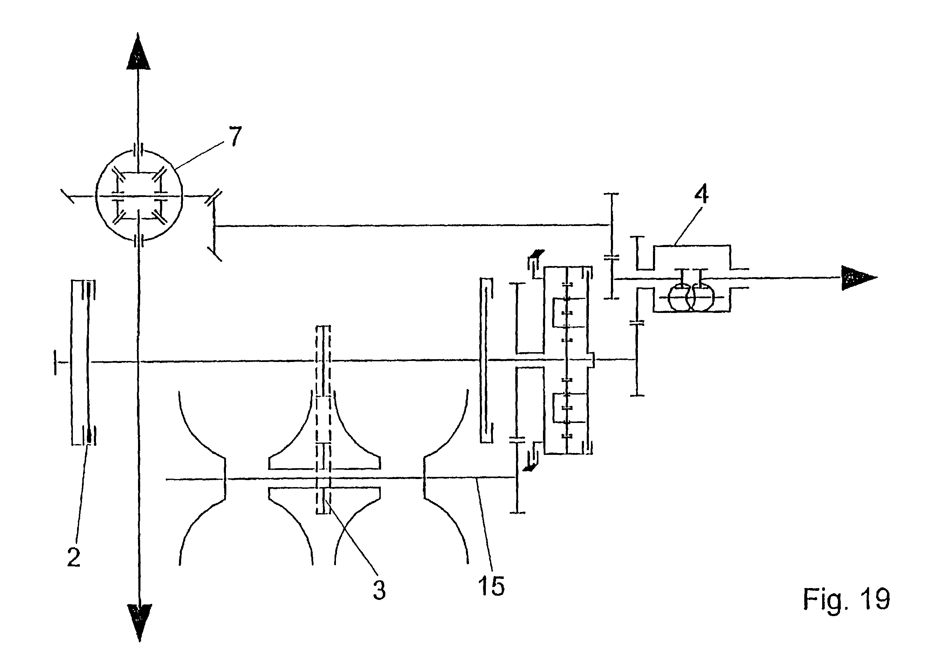

Fig. 19 zeigt eine Zweibereichsgetriebeeinheit mit Leistungsverzweigung, bei der da Anfahrelement 2 als Anfahrkupplung ausgebildet ist und bei der das Reibradgetriebe 3 auf der Vorgelegewelle 15 angeordnet ist.

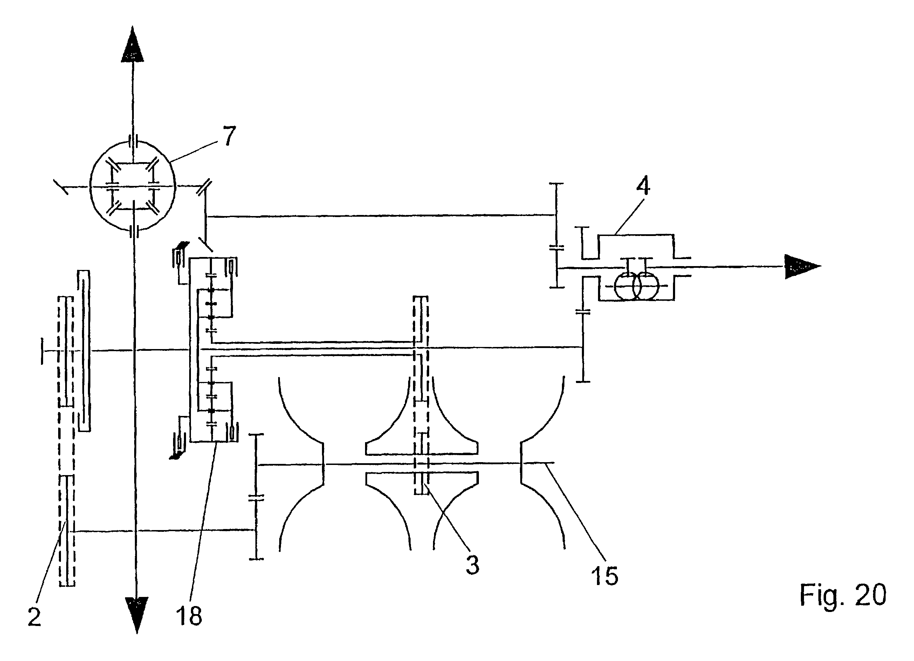

Fig. 20 zeigt eine Zweibereichsgetriebeeinheit mit Leistungsverzweigung, bei der das Anfahrelement 2 als integrierte Anfahrkupplung ausgestaltet ist, wobei das Reibradgetriebe 3 auf der Vorgelegewelle 15 nach dem Planetenradsatz 18 und den zugehörigen Kupplungen angeordnet ist.

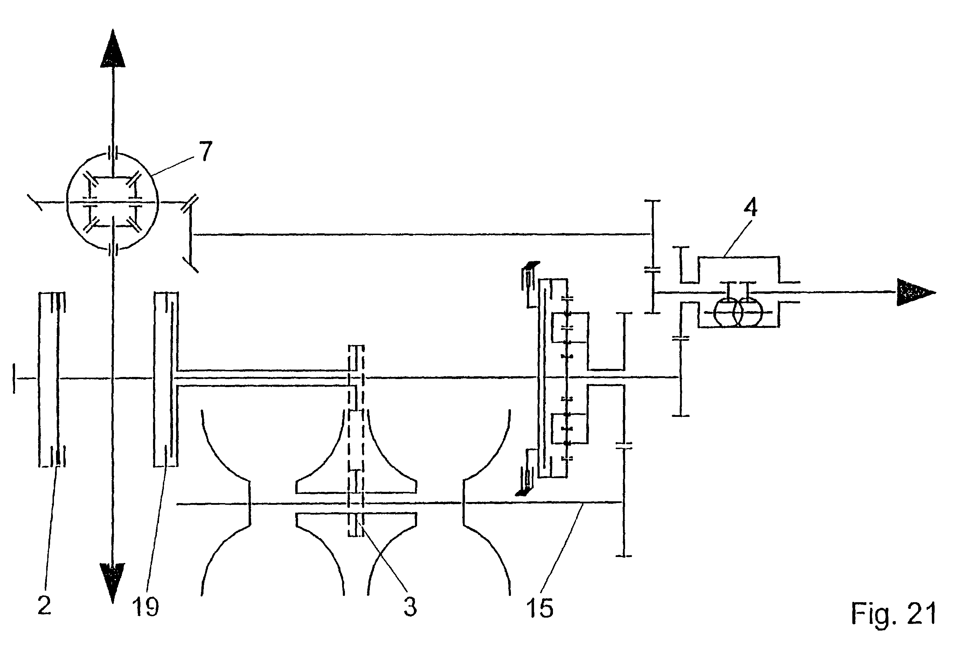

Fig. 21 zeigt eine Zweibereichsgetriebeeinheit mit Leistungsverzweigung, bei der das Anfahrelement 2 als Anfahrkupplung ausgestaltet ist; zwischen dem Anfahrelement und dem Reibradgetriebe 3 ist eine Kupplung 19 vorgesehen.

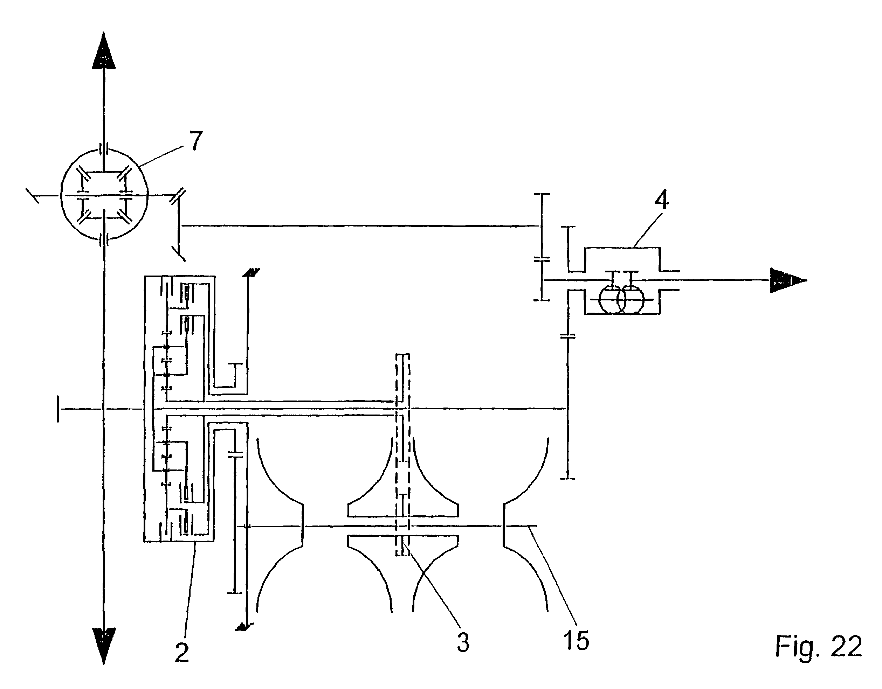

Fig. 22 zeigt eine Zweibereichsgetriebeeinheit mit Leistungsverzweigung und mit einer integrierten Anfahrkupplung 2, die vor dem Reibradgetriebe 3 angeordnet ist, welches sich auf der Vorgelegewelle 15 befindet.

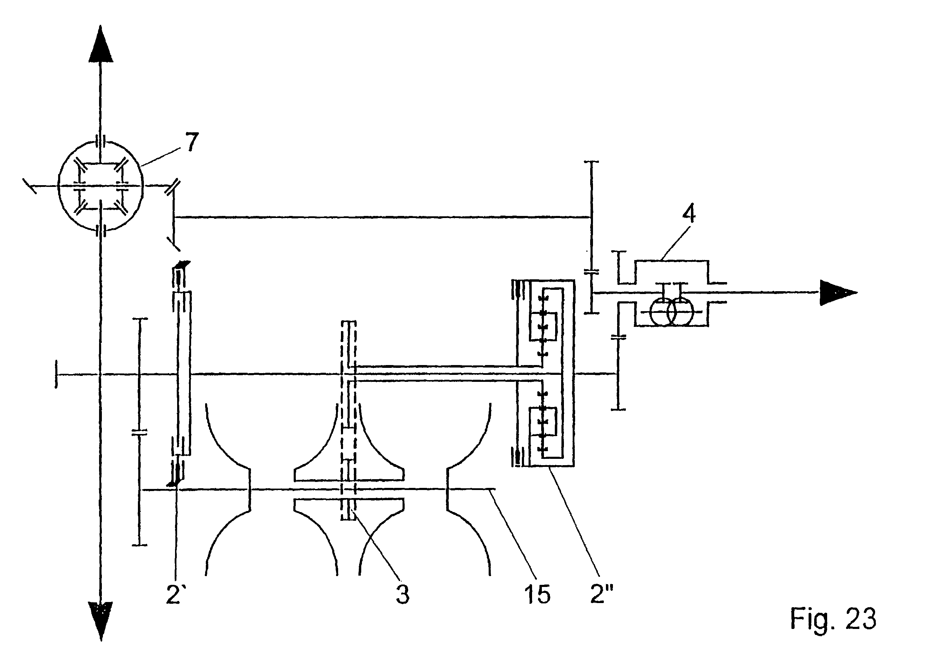

Fig. 23 zeigt eine Zweibereichsgetriebeeinheit mit Leistungsverzweigung, bei der das Reibradgetriebe 3 auf der Vorgelegewelle 15 angeordnet ist; die integrierte Anfahrkupplung ist hier in zwei Teile unterteilt, die vor und nach dem Reibradgetriebe 3 angeordnet sind.

## Patentansprüche

1. Getriebeeinheit, insbesondere für Kraftfahrzeuge, mit einem Gehäuse, mit einer Antriebswelle (1), mit mindestens einer Abtriebswelle (5; 6) und mit einer Anordnung (2, 3, 4) zur Veränderung des Übersetzungsverhältnisses zwischen Antriebswelle (1) und Abtriebswelle (5; 6) und mit folgender Anordnung im Gehäuse (8):
die Antriebswelle (1) ist mit einem Anfahrelement (2) verbunden;
das Anfahrelement (2) ist mit einem stufenlosen Getriebe (3) verbunden;
das stufenlose Getriebe (3) ist mit einem Verteilergetriebe (4) verbunden;
das Verteilergetriebe (4) weist eine erste Abtriebswelle (5) auf, die mit einem Hinterachsantrieb verbunden ist und eine zweite Abtriebswelle (6), die mit einem Differential (7) für einen Vorderachsantrieb verbunden ist, welches zwei Halbachsen (9) antreibt,
**dadurch gekennzeichnet,**
**dass** mindestens eine der Halbachsen (9) zwischen dem Differential (7) für den Vorderachsantrieb und dem zugehörigen Vorderrad das Gehäuse (8) zwischen dem Anfahrelement (2) und dem stufenlosen Getriebe (3) durchsetzt, oder, wenn das Anfahrelement (2) als integrierte Anfahrkupplung ausgebildet ist, vor der Eingangsseite des stufenlosen Getriebes (3) das Gehäuse (8) durchsetzt, und
**dass** die Halbachse (9) unter der Antriebswelle, jedoch nicht niedriger als das Anfahrelement (2), angeordnet ist.

2. Getriebeeinheit nach Anspruch 1, **dadurch gekennzeichnet, daß** das stufenlose Getriebe (3) ein CVT-Getriebe ist.

3. Getriebeeinheit nach Anspruch 1, **dadurch gekennzeichnet, daß** das stufenlose Getriebe (3) ein Reibradgetriebe mit zwei Getriebeeinheiten ist, deren Ausgangsscheiben eine gemeinsame Antriebswelle beaufschlagen.

4. Getriebeeinheit nach einem der vorhergehenden Ansprüche, **dadurch gekennzeichnet, daß** das Verteilergetriebe (4) ein Mittendifferential aufweist, für die Verteilung des Drehmoments an die Hinterachse und an die Vorderachse.

5. Getriebeeinheit nach Ansprüchen 2 bis 4, **dadurch gekennzeichnet, daß** sie ein Zweibereichsgetriebe ohne Leistungsverzweigung ist und daß das Anfahrelement (2) ein hydrodynamischer Wandler ist.

6. Getriebeeinheit nach Ansprüchen 2 bis 4, **dadurch gekennzeichnet, daß** sie ein Zweibereichsgetriebe ohne Leistungsverteilung ist und daß das Anfahrelement (2) eine Anfahrkupplung ist.

7. Getriebeeinheit nach Anspruch 6, **dadurch gekennzeichnet, daß** der Anfahrkupplung (2) ein Torsionsdämpfer (10) zugeordnet ist sowie eine Ölversorgungseinheit (11), mit einer motorseitigen Ölzufuhr (12) in Form einer Kanalplatte und mit einer getriebeseitigen Ölpumpe (13) in Form einer Innenzahnradpumpe.

8. Getriebeeinheit nach Ansprüchen 2 bis 4, **dadurch gekennzeichnet, daß** sie eine Zweibereichsgetriebeeinheit ohne Leistungsverzweigung ist und daß das Anfahrelement (2) eine integrierte Anfahrkupplung ist, die zwischen dem stufenlosen Getriebe (3) und dem Verteilergetriebe (4) angeordnet ist.

9. Getriebeeinheit nach Anspruch 8, **dadurch gekennzeichnet, daß** sie eine integrierte Anfahrkupplung und zwei Einzelplanetenradsätze aufweist.

10. Getriebeeinheit nach Anspruch 8, **dadurch gekennzeichnet, daß** sie eine integrierte Anfahrkupplung und einen einfachen Planetenradsatz aufweist.

11. Getriebeeinheit nach Anspruch 8, **dadurch gekennzeichnet, daß** sie eine integrierte Anfahrkupplung und einen geschachtelten Planetenradsatz aufweist.

12. Getriebeeinheit nach Anspruch 8, **dadurch gekennzeichnet, daß** sie eine integrierte Anfahrkupplung und eine Klauenkupplung als Schaltelement (2a) aufweist.

13. Getriebeeinheit nach Ansprüchen 2 bis 4, **dadurch gekennzeichnet, daß** sie eine Einbereichsgetriebeeinheit ist und daß das Anfahrelement (2) ein hydrodynamischer Wandler ist.

14. Getriebeeinheit nach Ansprüchen 2 bis 4, **dadurch gekennzeichnet, daß** sie eine Einbereichsgetriebeeinheit ist und daß das Anfahrelement (2) eine Anfahrkupplung ist.

15. Getriebeeinheit nach Ansprüchen 2 bis 4, **dadurch gekennzeichnet, daß** sie eine Einbereichsgetriebeeinheit ist und daß das Anfahrelement (2) eine integrierte Anfahrkupplung ist.

16. Getriebeeinheit nach Ansprüchen 2 bis 4, **dadurch gekennzeichnet, daß** sie ein Zweibereichsgetriebe ist und daß das Anfahrelement (2) ein Geared-Neutral-Getriebe ist, das zwischen dem stufenlosen Getriebe (3) und dem Verteilergetriebe (4) angeordnet ist.

17. Getriebeeinheit nach Anspruch 16, **dadurch gekennzeichnet, daß** das Reibradgetriebe (3) auf einer parallel zur Eingangswelle (1) angeordneten Vorgelegewelle (15) angeordnet ist.

18. Getriebeeinheit nach Anspruch 16, **dadurch gekennzeichnet, daß** das Geared-Neutral-Getriebe mit den zugehörigen Planetenradsätzen auf einer parallel zur Eingangswelle (1) angeordneten Vorgelegewelle (15) angeordnet ist.

19. Getriebeeinheit nach Anspruch 16, **dadurch gekennzeichnet, daß** das Geared-Neutral-Getriebe einen Stirntrieb (16) und eine Kupplung (17) aufweist, die beide auf einer parallel zur Eingangswelle (1) angeordneten Vorgelegewelle (15) angeordnet sind.

20. Getriebeeinheit nach Ansprüchen 2 bis 4, **dadurch gekennzeichnet, daß** sie eine Zweibereichsgetriebeeinheit mit Leistungsverzweigung ist und daß das Anfahrelement (2) ein hydrodynamischer Wandler ist.

21. Getriebeeinheit nach Ansprüchen 2 bis 4, **dadurch gekennzeichnet, daß** sie eine Zweibereichsgetriebeeinheit mit Leistungsverzweigung ist und daß das Anfahrelement (2) eine Anfahrkupplung ist.

22. Getriebeeinheit nach Anspruch 21, **dadurch gekennzeichnet, daß** sie einen Planetentrieb aufweist, der auf einer parallel zur Eingangswelle (1) angeordneten Vorgelegewelle (15) angeordnet ist.

23. Getriebeeinheit nach Ansprüchen 2 bis 4, **dadurch gekennzeichnet, daß** sie eine Zweibereichsgetriebeeinheit mit Leistungsverzweigung ist und daß das Anfahrelement (2) eine integrierte Anfahrkupplung ist.

24. Getriebeeinheit nach Anspruch 23, **dadurch gekennzeichnet, daß** das stufenlose Getriebe (3) auf einer parallel zur Eingangswelle (1) angeordneten Vorgelegewelle angeordnet ist.

25. Getriebeeinheit nach Anspruch 21, **dadurch gekennzeichnet, daß** das stufenlose Getriebe (3) auf einer parallel zur Eingangwelle (1) angeordneten Vorgelegewelle (15) angeordnet ist.

26. Getriebeeinheit nach Anspruch 24, **dadurch gekennzeichnet, daß** der Planetentrieb und die zugehörigen Kupplungen der integrierten Anfahrkupplung zwischen den Halbachsen (9) des Differentials (7) für die Vorderräder und dem stufenlosen Getriebe (3) angeordnet sind.

27. Getriebeeinheit nach Anspruch 25, **dadurch gekennzeichnet, daß** die Anfahrkupplung (2) vor dem stufenlosen Getriebe (3) angeordnet ist.

28. Getriebeeinheit nach Anspruch 25, **dadurch gekennzeichnet, daß** die Anfahrkupplung (2) in zwei Teile unterteilt ist, wobei ein Teil (2') vor dem stufenlosen Getriebe (3) und ein Teil (2'') nach dem stufenlosen Getriebe angeordnet ist.

## Claims

1. Transmission unit, particularly for motor vehicles, with a housing, with a drive shaft (1), with at least one driven shaft (5; 6) and with an arrangement (2, 3, 4) for varying the transmission ratio between the drive shaft (1) and the driven shaft (5; 6) and with the following arrangement in the housing (8):
the drive shaft (1) is connected to a starting element (2);
the starting element (2) is connected to an infinitely variable transmission (3);
the infinitely variable transmission (3) is connected to a distributor transmission (4);
the distributor transmission (4) has a first driven shaft (5) which is connected to a rear-axle drive, and a second driven shaft (6) which is connected to a differential (7) for a front-axle drive, which differential drives two half-axles (9),
**characterised in that**
at least one of the half-axles (9) between the differential (7) for the front-axle drive and the appertaining front wheel passes through the housing (8) between the starting element (2) and the infinitely variable transmission (3), or, if the starting element (2) is constructed as an integrated starting clutch, passes through the housing (8) upstream of the input side of the infinitely variable transmission (3), and
that the half-axle (9) is disposed below the drive shaft, but not lower than the starting element (2).

2. Transmission unit according to claim 1, **characterised in that** the infinitely variable transmission (3) is a CVT transmission.

3. Transmission unit according to claim 1, **characterised in that** the infinitely variable transmission (3) is a friction-wheel transmission with two transmission units whose output pulleys act upon a common drive shaft.

4. Transmission unit according to one of the preceding claims, **characterised in that** the distributor transmission (4) has a central differential for distributing the torque to the rear axle and front axle.

5. Transmission unit according to claims 2 to 4, **characterised in that** said transmission unit is a two-range transmission without power-splitting, and that the starting element (2) is a hydrodynamic converter.

6. Transmission unit according to claims 2 to 4, **characterised in that** said transmission unit is a two-range transmission without power-distribution, and that the starting element (2) is a starting clutch.

7. Transmission unit according to claim 6, **characterised in that** there is associated with the starting clutch (2) a torsion-damper (10) and also an oil-supply unit (11) with an oil feed (12) on the engine in the form of a grooved plate and with an oil pump (13) on the transmission in the form of an internal-gear pump.

8. Transmission unit according to claims 2 to 4, **characterised in that** said transmission unit is a two-range transmission unit without power-splitting, and that the starting element (2) is an integrated starting clutch which is disposed between the infinitely variable transmission (3) and the distributor transmission (4).

9. Transmission unit according to claim 8, **characterised in that** said transmission unit has an integrated starting clutch and two individual planet-wheel sets.

10. Transmission unit according to claim 8, **characterised in that** said transmission unit has an integrated starting clutch and a single planet-wheel set.

11. Transmission unit according to claim 8, **characterised in that** said transmission unit has an integrated starting clutch and a nested planet-wheel set.

12. Transmission unit according to claim 8, **characterised in that** said transmission unit has an integrated starting clutch and a dog clutch as the shift element (2a) .

13. Transmission unit according to claims 2 to 4, **characterised in that** said transmission unit is a single-range transmission unit, and that the starting element (2) is a hydrodynamic converter.

14. Transmission unit according to claims 2 to 4, **characterised in that** said transmission unit is a single-range transmission unit, and that the starting element (2) is a starting clutch.

15. Transmission unit according to claims 2 to 4, **characterised in that** said transmission unit is a single-range transmission unit, and that the starting element (2) is an integrated starting clutch.

16. Transmission unit according to claims 2 to 4, **characterised in that** said transmission unit is a two-range transmission, and that the starting element (2) is a geared-neutral transmission which is disposed between the infinitely variable transmission (3) and the distributor transmission (4).

17. Transmission unit according to claim 16, **characterised in that** the friction-wheel transmission (3) is disposed on a countershaft (15) disposed parallel to the input shaft (1).

18. Transmission unit according to claim 16, **characterised in that** the geared-neutral transmission is disposed, with the appertaining planet-wheel sets, on a countershaft (15) disposed parallel to the input shaft (1) .

19. Transmission unit according to claim 16, **characterised in that** the geared-neutral transmission has a spur pinion (16) and a clutch (17) which are both disposed on a countershaft (15) disposed parallel to the input shaft (1) .

20. Transmission unit according to claims 2 to 4, **characterised in that** said transmission unit is a two-range transmission unit with power-splitting, and that the starting element (2) is a hydrodynamic converter.

21. Transmission unit according to claims 2 to 4, **characterised in that** said transmission unit is a two-range transmission unit with power-splitting, and that the starting element (2) is a starting clutch.

22. Transmission unit according to claim 21, **characterised in that** said transmission unit has a planetary gear unit which is disposed on a countershaft (15) disposed parallel to the input shaft (1).

23. Transmission unit according to claims 2 to 4, **characterised in that** said transmission unit is a two-range transmission unit with power-splitting, and that the starting element (2) is an integrated starting clutch.

24. Transmission unit according to claim 23, **characterised in that** the infinitely variable transmission (3) is disposed on a countershaft disposed parallel to the input shaft (1) .

25. Transmission unit according to claim 21, **characterised in that** the infinitely variable transmission (3) is disposed on a countershaft (15) disposed parallel to the input shaft (1).

26. Transmission unit according to claim 24, **characterised in that** the planetary gear unit and the appertaining clutches of the integrated starting clutch are disposed between the half-axles (9) of the differential (7) for the front wheels and the infinitely variable transmission (3).

27. Transmission unit according to claim 25, **characterised in that** the starting clutch (2) is disposed upstream of the infinitely variable transmission (3).

28. Transmission unit according to claim 25, **characterised in that** the starting clutch (2) is subdivided into two parts, one part (2') being disposed upstream of the infinitely variable transmission (3) and one part (2'') being disposed downstream of said infinitely variable transmission.

## Revendications

1. Unité de transmission, en particulier, pour véhicules automobiles, comprenant un carter, un arbre d'entrée (1), au moins un arbre de sortie (5; 6) et un dispositif (2, 3, 4) destiné à faire varier le rapport de transmission entre l'arbre d'entrée (1) et l'arbre de sortie (5; 6), et présentant la disposition suivante dans le carter (8) :
l'arbre d'entrée (1) est relié à un élément de démarrage (2) ;
l'élément de démarrage (2) est relié à une transmission à variation continue (3) ;
la transmission à variation continue (3) est reliée à une transmission de répartition (4) ;
la transmission de répartition (4) comprend un premier arbre de sortie (5), qui est relié à un entraînement d'essieu arrière, et un deuxième arbre de sortie (6) qui est relié à un différentiel (7) prévu pour un entraînement d'essieu avant, lequel entraîne deux demi-arbres (9),
**caractérisée en ce que**
au moins un des demi-arbres (9), placé entre le différentiel (7) prévu pour l'entraînement de l'essieu avant, et la roue avant correspondante traverse le carter (8) entre l'élément de démarrage (2) et la transmission à variation continue (3) ou, dans les cas où l'élément de démarrage (2) est constitué par un embrayage de démarrage intégré, traverse le carter (8) en avant du côté d'entrée de la transmission à variation continue (3), et
**en ce que** le demi-arbre (9) est disposé sous l'arbre d'entrée mais n'est pas disposé plus bas que l'élément de démarrage (2).

2. Unité de transmission selon la revendication 1, **caractérisée en ce que** la transmission à variation continue (3) est une transmission CVT.

3. Unité de transmission selon la revendication 1, **caractérisée en ce que** la transmission à variation continue (3) est une transmission à roues de friction comprenant deux unités de transmission dont les disques de sortie attaquent un arbre d'entrée commun.

4. Unité de transmission selon l'une des revendications précédentes, **caractérisée en ce que** la transmission de répartition (4) comporte un différentiel central pour la répartition du couple sur l'essieu arrière et sur l'essieu avant.

5. Unité de transmission selon les revendications 2 à 4, **caractérisée en ce qu'**elle est une transmission à deux zones sans ramification de puissance et **en ce que** l'élément de démarrage (2) est un convertisseur hydrodynamique.

6. Unité de transmission selon les revendications 2 à 4, **caractérisée en ce qu'**elle est une transmission à deux zones sans distribution de puissance et **en ce que** l'élément de démarrage (2) est un embrayage de démarrage.

7. Unité de transmission selon la revendication 6, **caractérisée en ce qu'**à l'embrayage de démarrage (2), sont combinés un amortisseur de torsion (10) ainsi qu'une unité d'alimentation en huile (11) comprenant une arrivée d'huile (12) côté moteur réalisée sous la forme d'une plaque à canal et une pompe à huile (13) côté transmission constituée par une pompe à engrenage intérieur.

8. Unité de transmission selon les revendications 2 à 4, **caractérisée en ce qu'**elle est une unité de transmission à deux zones sans ramification de puissance et **en ce que** l'élément de démarrage (2) est un embrayage de démarrage intégré qui est disposé entre la transmission à variation continue (3) et la transmission de répartition (4).

9. Unité de transmission selon la revendication 8, **caractérisée en ce qu'**elle comporte un embrayage de démarrage intégré et deux trains épicycloïdaux individuels.

10. Unité de transmission selon la revendication 8, **caractérisée en ce qu'**elle comporte un embrayage de démarrage intégré et un simple train épicycloïdal.

11. Unité de transmission selon la revendication 8, **caractérisée en ce qu'**elle comprend un embrayage de démarrage intégré et un train épicycloïdal emboîté.

12. Unité de transmission selon la revendication 8, **caractérisée en ce qu'**elle comprend un embrayage de démarrage intégré et un embrayage à crabots comme élément de changement (2a).

13. Unité de transmission selon les revendications 2 à 4, **caractérisée en ce qu'**elle est une unité de transmission à une zone et l'élément de démarrage (2) est un convertisseur hydrodynamique.

14. Unité de transmission selon les revendications 2 à 4, **caractérisée en ce qu'**elle est une unité de transmission à une zone et **en ce que** l'élément de démarrage (2) est un embrayage de démarrage.

15. Unité de transmission selon les revendications 2 à 4, **caractérisée en ce qu'**elle est une unité de transmission à une zone et **en ce que** l'élément de démarrage (2) est un embrayage de démarrage intégré.

16. Unité de transmission selon les revendications 2 à 4, **caractérisée en ce qu'**elle est une transmission à deux zones et **en ce que** l'élément de démarrage (2) est une transmission à engrenages-point mort qui est disposé entre la transmission à variation continue (3) et la transmission de répartition (4).

17. Unité de transmission selon la revendication 16, **caractérisée en ce que** la transmission à roues de friction (3) est disposée sur un arbre intermédiaire (15) disposé parallèlement à l'arbre d'entrée (1).

18. Unité de transmission selon la revendication 16, **caractérisée en ce que** la transmission à engrenages-point mort, avec les trains épicycloïdaux qui lui correspondent, est disposée sur un arbre intermédiaire (15) disposé parallèlement à l'arbre d'entrée (1).

19. Unité de transmission selon la revendication 16, **caractérisée en ce que** la transmission à engrenages-point mort comporte un entraînement à engrenages droits (16) et un embrayage (17) qui sont tous deux disposés sur un arbre intermédiaire (15) disposé parallèlement à l'arbre d'entrée (1).

20. Unité de transmission selon les revendications 2 à 4, **caractérisée en ce qu'**elle est une unité de transmission à deux zones avec ramification de la puissance et **en ce que** l'élément de démarrage (2) est un convertisseur hydrodynamique.

21. Unité de transmission selon les revendications 2 à 4, **caractérisée en ce qu'**elle est une unité de transmission à deux zones avec ramification de la puissance et **en ce que** l'élément de démarrage (2) est un embrayage de démarrage.

22. Unité de transmission selon la revendication 21, **caractérisée en ce qu'**elle comporte un entraînement épicycloïdal qui est disposé sur un arbre intermédiaire (15) disposé parallèlement à l'arbre d'entrée (1).

23. Unité de transmission selon les revendications 2 à 4, **caractérisée en ce qu'**elle est une unité de transmission à deux zones avec ramification de la puissance et **en ce que** l'élément de démarrage (2) est un embrayage de démarrage.

24. Unité de transmission selon la revendication 23, **caractérisée en ce que** la transmission à variation continue (3) est disposée sur un arbre intermédiaire disposé parallèlement à l'arbre d'entrée (1).

25. Unité de transmission selon la revendication 21, **caractérisée en ce que** la transmission à variation continue (3) est disposée sur un arbre intermédiaire (15) disposé parallèlement à l'arbre d'entrée (1).

26. Unité de transmission selon la revendication 24, **caractérisée en ce que** l'entraînement épicycloïdal et les embrayages correspondants de l'embrayage de démarrage intégré sont disposés entre les demi-arbres (9) du différentiel (7) prévu pour les roues avant et la transmission à variation continue (3).

27. Unité de transmission selon la revendication 25, **caractérisée en ce que** l'embrayage de démarrage (2) est disposé en amont de la transmission à variation continue (3).

28. Unité de transmission selon la revendication 25, **caractérisée en ce que** l'embrayage de démarrage (2) est subdivisé en deux parties, une partie (2') étant disposée en amont de la transmission à variation continue (3) et une partie (2") est disposée en aval de la transmission à variation continue.
